# EUROPEAN PATENT APPLICATION

(11) **EP 4 613 594 A1**
(43) Date of publication of application: **10.09.2025**
(21) Application number: 24161150.8
(22) Date of filing: 04.03.2024
(51) Int. Cl.: B60W 30/18

(54) **A COMPUTER SYSTEM AND METHOD FOR CREEP MODE CONTROL**

(71) Applicant: VOLVO TRUCK CORPORATION, 405 08 Göteborg (SE)
(72) Inventor: ANDREASSON, Mattias, 412 60 GÖTEBORG (SE); BERNLER, Hans, 431 64 MÖLNDAL (SE); KHATEEB, Yones, 421 48 VÄSTRA FRÖLUNDA (SE)
(74) Representative: Ström & Gulliksson AB

(57) **Abstract**

A computer system is provided. The computer system comprises processing circuitry configured to: detect at least a partial release of at least one of an accelerator pedal (14) or a brake pedal (16) of a vehicle (1); determine that an initial travelling speed is within a predetermined creep activation threshold (240); determine the brake pedal (16) is not depressed and the accelerator pedal (14) is not sufficiently depressed to accelerate the vehicle (1) beyond the initial travelling speed; set an initial creep speed based on the initial travelling speed of the vehicle; and maintain the vehicle (1) at the initial creep speed.

## Description

### TECHNICAL FIELD

The disclosure relates generally to vehicles. In particular aspects, the disclosure relates to a computer system and method for creep mode control. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles may be provided with a creep mode feature. When a vehicle enters creep mode, a fixed amount of torque is typically applied in order to propel the vehicle at a slow speed. As a result, the vehicle may operate significantly different based on a number of parameters such as road inclination, road condition, and vehicle weight. Existing creep mode features thus rarely provide driving characteristics matching the driver's preference.

### SUMMARY

According to a first aspect of the disclosure, a computer system is provided. The computer system comprises processing circuitry configured to detect at least a partial release of at least one of an accelerator pedal or a brake pedal of a vehicle, determine that an initial travelling speed is within a predetermined creep activation threshold, determine that the brake pedal is not depressed and that the accelerator pedal is not sufficiently depressed to accelerate the vehicle beyond the initial travelling speed of the vehicle, set an initial creep speed based on the initial travelling speed of the vehicle, and maintain the vehicle at the initial creep speed. The first aspect of the disclosure may seek to simplify vehicle control. A technical benefit may include reducing strain of an operator of the vehicle In particular, the driver may control the creep mode speed of the vehicle based on the initial travelling speed, which requires less actuation of the accelerator pedal and/or the brake pedal.

Within the context of this specification, the term "creep" is to be interpreted as the vehicle moving in forward or reverse at a specific speed, not necessarily including the acceleration up to (or deceleration down to) the specific speed. Generally, during creep mode the specific speed of the vehicle is low such as in the range of 0 to 15 km/h, as will be further exemplified below.

Optionally in some examples, including in at least one preferred example, the processing circuitry is further configured to detect a release of at least one of the accelerator pedal or the brake pedal by at least 95%. A technical benefit may include further simplifying vehicle control; as some action on the pedals will be allowed without affecting the creep control, the driver will not be required to completely remove the pressure from the pedals.

Optionally in some examples, including in at least one preferred example, the processing circuitry is further configured to assign the initial creep speed as the initial travelling speed of the vehicle. A technical benefit may include a very responsive action of the creep activation, as the driver sets the speed as the travelling speed.

Optionally in some examples, including in at least one preferred example, the processing circuitry is further configured to obtain speed change data corresponding to a current acceleration or deceleration of the vehicle; determine that the current acceleration or deceleration is above a preset acceleration or deceleration threshold; obtain a speed adjustment factor based on the speed change data; and assign the initial creep speed as the initial travelling speed plus or minus the speed adjustment factor. A technical benefit may include a more intelligent and smooth control of the creep, by allowing the adjustment factor to compensate for the rapid speed change and thereby avoiding speed over- or undershoot.

Optionally in some examples, including in at least one preferred example, the processing circuitry is further configured to obtain creep speed increase data corresponding to the accelerator pedal of the vehicle being temporarily depressed; assign an updated creep speed based on the creep speed increase data; and maintain the vehicle at the assigned updated creep speed. A technical benefit may include simplified control and updating of the creep speed.

Optionally in some examples, including in at least one preferred example, the processing circuitry is further configured to obtain the creep speed increase data based on the depression amount of the accelerator pedal. A technical benefit may include simplified control and update of the creep speed, as the creep speed increase will be responsive to the depression amount.

Optionally in some examples, including in at least one preferred example, the processing circuitry is further configured to assign the updated creep speed as the current speed of the vehicle immediately after the accelerator pedal being temporarily depressed. A technical benefit may include fast response when updating the creep speed.

Optionally in some examples, including in at least one preferred example, the processing circuitry is further configured to assign the updated creep speed as the previous creep speed plus a preset speed increase. A technical benefit may include simplified update of the creep speed, using preset and incremental speed increase steps.

Optionally in some examples, including in at least one preferred example, the processing circuitry is further configured to obtain creep speed decrease data corresponding to the brake pedal of the vehicle being temporarily depressed; assign an updated creep speed based on the creep speed decrease data; and maintain the vehicle at the assigned updated creep speed. A technical benefit may include simplified control and updating of the creep speed.

Optionally in some examples, including in at least one preferred example, the processing circuitry is further configured to obtain the creep speed decrease data based on the depression amount of the brake pedal. A technical benefit may include simplified control and update of the creep speed, as the creep speed increase will be responsive to the depression amount.

Optionally in some examples, including in at least one preferred example, the processing circuitry is further configured to assign the updated creep speed as the current speed of the vehicle immediately after the brake pedal being temporarily depressed. A technical benefit may include fast response when updating the creep speed.

Optionally in some examples, including in at least one preferred example, the processing circuitry is further configured to assign the updated creep speed as the previous creep mode speed minus a preset speed decrease. A technical benefit may include simplified update of the creep speed, using preset and incremental speed decrease steps.

Optionally in some examples, including in at least one preferred example, the processing circuitry is further configured to: obtain vehicle motion data corresponding to the vehicle moving forward or reverse; and selecting the creep activation threshold based on the vehicle motion data. A technical benefit may include a more versatile and safe operation of the vehicle, e.g. by allowing creep only at lower speeds when operating the vehicle in reverse.

Optionally in some examples, including in at least one preferred example, the processing circuitry is further configured to obtain proximity data corresponding to the presence of a moving object ahead of the vehicle in the driving direction; assign an updated creep speed for maintaining a minimum distance to the moving object; and maintain the vehicle at the assigned updated creep speed. A technical benefit may include a more safe operation of the vehicle in creep mode.

Optionally in some examples, including in at least one preferred example, the processing circuitry is further configured to detect a release of at least one of the accelerator pedal or the brake pedal by at least 95%; assign the initial creep speed as the initial travelling speed of the vehicle; obtain creep speed increase data corresponding to the accelerator pedal of the vehicle being temporarily depressed and based on the depression amount of the accelerator pedal; assign an updated creep speed as the current speed of the vehicle immediately after the accelerator pedal has been temporarily depressed; and maintain the vehicle at the assigned updated creep speed; obtain creep speed decrease data corresponding to the brake pedal of the vehicle being temporarily depressed and based on the depression amount of the brake pedal; assign an updated creep speed based as the previous creep speed minus a preset speed decrease; and maintain the vehicle at the assigned updated creep mode speed; obtain vehicle motion data corresponding to the vehicle moving forward or reverse; and selecting the creep activation threshold based on the vehicle motion data; obtain proximity data corresponding to the presence of a moving object ahead of the vehicle in the driving direction; assign an updated creep speed for maintaining a minimum distance to the moving object; and maintain the vehicle at the assigned updated creep speed; and obtaining creep mode termination data; and terminating control of the vehicle at the updated creep speed. A technical benefit may include efficient cancelling of the creep mode of the vehicle.

According to a second aspect of the disclosure, a vehicle is provided. The vehicle comprises the computer system of the first aspect. The second aspect of the disclosure may seek to simplify vehicle control. A technical benefit may include reducing strain of an operator of the vehicle In particular, the driver may control the creep mode speed of the vehicle based on the initial travelling speed, which requires less actuation of the accelerator pedal and/or the brake pedal.

According to a third aspect of the disclosure, a computer-implemented method is provided. The computer-implemented method comprises detecting, by processing circuitry of a computer system, at least a partial release of at least one of an accelerator pedal or a brake pedal of a vehicle; determining, by the processing circuitry, that an initial travelling speed is within a predetermined creep activation threshold; determining, by the processing circuitry, the brake pedal is not depressed and the accelerator pedal is not sufficiently depressed to accelerate the vehicle beyond the initial travelling speed; setting, by the processing circuitry, an initial creep speed based on the initial travelling speed of the vehicle; and maintaining, by the processing circuitry, the vehicle at the initial creep speed. The third aspect of the disclosure may seek to simplify vehicle control. A technical benefit may include reducing strain of an operator of the vehicle In particular, the driver may control the creep mode speed of the vehicle based on the initial travelling speed, which requires less actuation of the accelerator pedal and/or the brake pedal.

Optionally in some examples, including in at least one preferred example, the method further comprises obtaining, by the processing circuitry, vehicle motion data corresponding to the vehicle moving forward or in reverse; and selecting, by the processing circuitry, the creep activation threshold based on the vehicle motion data. A technical benefit may include a more versatile and safe operation of the vehicle, e.g. by allowing creep only at lower speeds when operating the vehicle in reverse.

According to a fourth aspect of the disclosure, a computer program product is provided. The computer program product comprises program code for performing, when executed by the processing circuitry, the method of the third aspect. The fourth aspect of the disclosure may seek to simplify vehicle control. A technical benefit may include reducing strain of an operator of the vehicle In particular, the driver may control the creep mode speed of the vehicle based on the initial travelling speed, which requires less actuation of the accelerator pedal and/or the brake pedal.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect. The fifth aspect of the disclosure may seek to simplify vehicle control. A technical benefit may include reducing strain of an operator of the vehicle In particular, the driver may control the creep mode speed of the vehicle based on the initial travelling speed, which requires less actuation of the accelerator pedal and/or the brake pedal.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary side view of a vehicle according to an example.
**FIG. 2A** is an exemplary diagram of a creep control system according to an example.
**FIG. 2B** is an exemplary diagram of a creep speed update control system according to an example.
**FIG. 3** is an exemplary diagram of a creep control system according to an example.
**FIGS. 4A-C** are speed diagrams illustrating creep speed set points according to different examples.
**FIG. 5** is a flow chart of an exemplary method to control creep of a vehicle according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The examples presented herein provide a solution to controlling creep of a vehicle. When the vehicle is running within a preset speed interval, or at least below a preset upper speed limit, the vehicle will automatically maintain the current speed of the vehicle when the pedals are released by the driver. The driver is thereby allowed to initiate creep by releasing the pedals, and simultaneously set the creep speed by selecting the vehicle speed at which the pedals are released. The driver may thus control a creep speed of the vehicle which allows for a less straining working environment (i.e. less actuation of accelerator and brake) and simplified control of the vehicle.

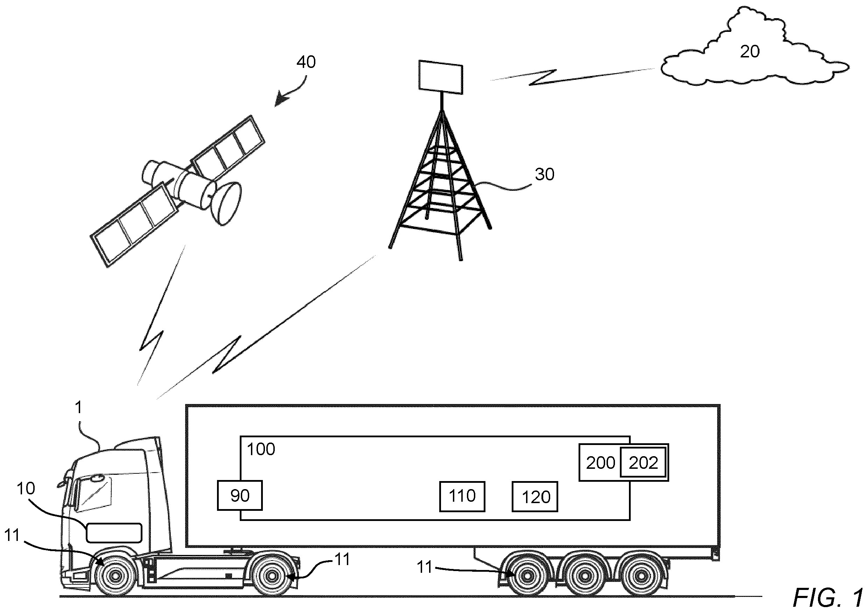

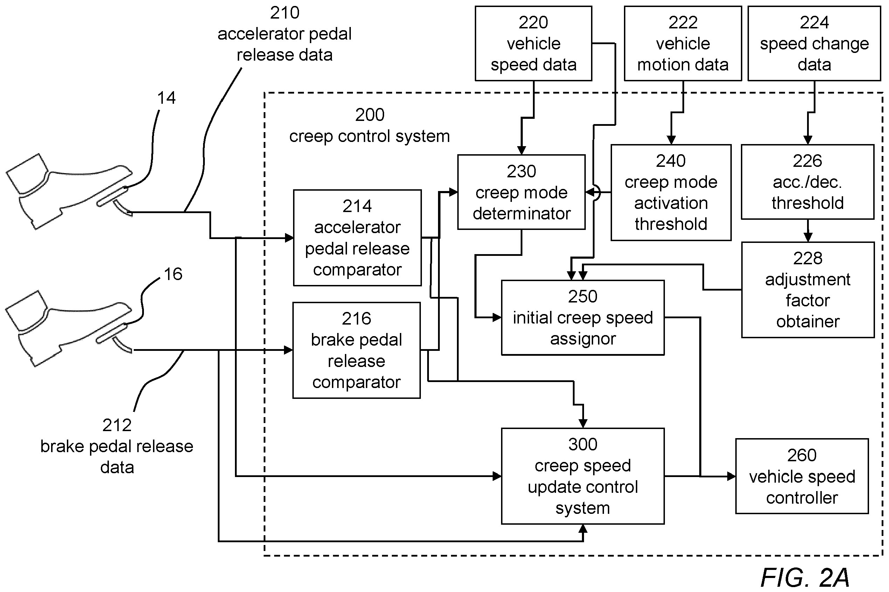

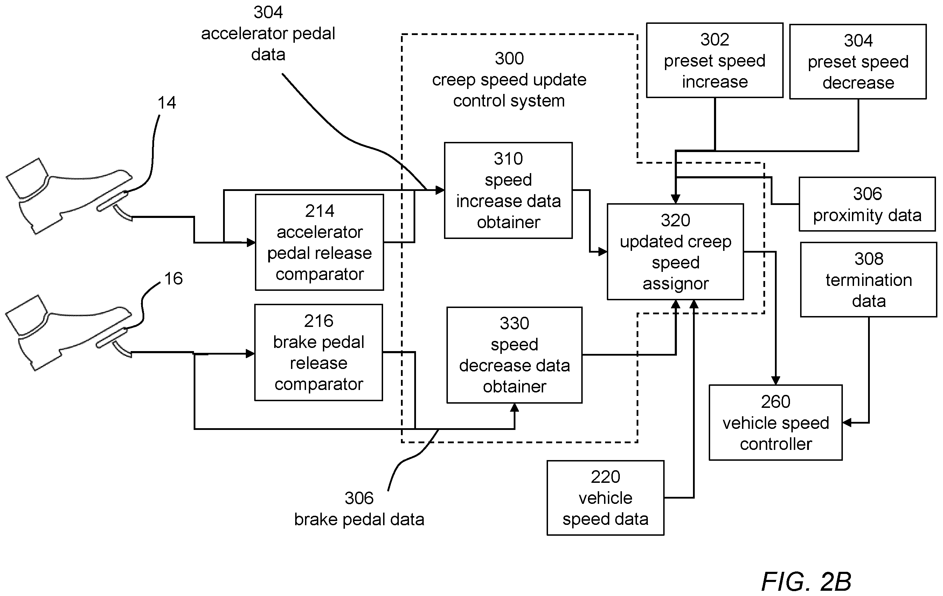

**FIG. 1** is an exemplary view of a vehicle **1** according to one example. The vehicle **1** comprises one or more propulsion units **10,** as well as one or more brake units **11.** The one or more propulsion units **10** is configured to accelerate the vehicle **1,** while the one or more brake units **11** is configured to decelerate the vehicle **1.** Pedals **14, 16** (see e.g. **FIG. 2**) are also forming part of the vehicle **1** and used by the driver to control operation of the one or more propulsion units **10** and the one or more brake units **11.** The vehicle **1** is programmed to control creep mode, or creeping, as will be described further in the following.

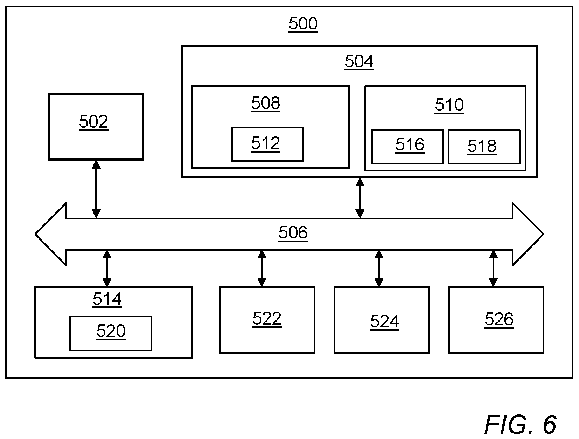

The vehicle **1** comprises, at least to some extent, processing circuitry **110** forming part of a computer system **100** (see **FIG. 6**). The processing circuitry **110** is configured to implement a creep control system **200.** The pedals **14, 16** form part of, or is in communication with, the creep control system **200.**

The vehicle **1** may further comprise communications circuitry **90** configured to receive and/or send communications. The communications circuitry **90** may be configured to enable the vehicle **1** to communicate with one or more external devices or systems such as a cloud server **20.** The communication with the external devices or systems may be directly or via a communications interface such as a cellular communications interface **30,** such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **90** may, additionally or alternatively, be configured to enable the vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **1** may for example be configured to utilize data obtain from the GNSS **40** to determine a geographical location of the vehicle **1.**

The vehicle **1** in **FIG. 1** comprises the computer system **100** and the creep control system **200.** The computer system **100** may be operatively connected to the creep control system **200** and optionally to the communications circuitry **90** of the vehicle **1.** The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system **100.** The control system system **200** may comprise creep control system processing circuitry **202;** the creep control system processing circuitry **202** may be part of the processing circuitry **110** of the computer system **100.**

**FIG. 2A** is a schematic diagram of a creep control system **200.** The creep control system **200** is in communication with an accelerator pedal **14** of the vehicle **1** as well as with a brake pedal **16** of the vehicle **1.** The pedals **14, 16** may or may not form part of the creep control system **200.** The accelerator pedal **14** is configured to transmit accelerator pedal release data **210,** and the brake pedal **16** is configured to transmit brake pedal release data **212.** The pedal release data **210, 212** may be transmitted upon release of any of the pedals **14, 16,** or the pedal release data **210, 212** may be a current state variable which is accessible for the creep control system **200** upon request.

The accelerator pedal release data **210** is received by an accelerator pedal release comparator **214.** The accelerator pedal release comparator **214** is configured to determine that the accelerator pedal **14** is released, at least that it is released to a sufficient extent. The accelerator pedal release comparator **214** may be configured to operate against a certain depression amount, such that a release is determined as long as the accelerator pedal **14** is not depressed more than a predetermined amount, such as 90% or such as 95%, or such as 98%. The accelerator pedal release comparator **214** may optionally be configured to operate against current driving conditions, e.g. such that a release is determined as long as the accelerator pedal **14** is not depressed sufficiently to cause a speed increase of the vehicle **1.**

The brake pedal release data **212** is received by a brake pedal release comparator **216.** The brake pedal release comparator **216** is configured to determine that the brake pedal **16** is released, at least that it is released to a sufficient extent. The brake pedal release comparator **216** may be configured to operate against a certain depression amount, such that a release is determined as long as the brake pedal **16** is not depressed more than a predetermined amount, such as 90% or such as 95%, or such as 98%. The brake pedal release comparator **216** may optionally be configured to operate against current driving conditions, e.g. such that a release is determined as long as the brake pedal **16** is not depressed sufficiently to cause a speed decrease of the vehicle **1.**

The accelerator pedal release comparator **214** and the brake pedal release comparator **216** are in data communication with a creep mode determinator **230.** The creep mode determinator **230** is configured to receive data indicative of the accelerator pedal **14** and the brake pedal **16** being released, as identified by the respective comparator **214, 216.** The creep mode determinator **230** is further configured to receive vehicle speed data **220,** representing the current travelling speed of the vehicle **1.** The creep mode determinator **230** is further configured to receive data representing a creep mode activation threshold **240.** The creep mode activation threshold **240** may be a predetermined interval, setting the boundaries for allowable creep speeds. The creep mode determinator **230** is configured to determine that the current travelling speed of the vehicle **1** is within the creep mode activation threshold **240,** and to further determine that i) the brake pedal **16** is not depressed and ii) that the accelerator pedal **14** is not sufficiently depressed to accelerate the vehicle **1** beyond the current travelling speed of the vehicle **1.** The creep mode determinator **230** is configured to issue a command to an initial creep speed assignor **250.** The initial creep speed assignor **250** is configured to set an initial creep speed of the vehicle based on the travelling speed of the vehicle **1,** as obtained from the vehicle speed data **220.**

The creep control system **200** further comprises a vehicle speed controller **260.** The vehicle speed controller **260** is configured to receive the initial creep speed from the initial creep speed assignor **250,** and to control the vehicle **1** in a creep mode applying the initial creep speed.

The creep mode activation threshold **240** may in some examples, including the example shown in **FIG. 2A****,** be selected based on vehicle motion data **222.** The vehicle motion data **222** may e.g. indicate if the vehicle **1** is travelling forward or in reverse. The creep mode activation threshold **240** may be a first threshold when the vehicle **1** is travelling forward, and a second threshold when the vehicle **1** is travelling in reverse. For example, the creep mode activation threshold **240** may be 2-10km/h for forward driving, and 2-8 km/h for reverse driving. This means that when going in reverse at 10km/h, creep mode will not be activated when the pedals **14, 16** are released.

Other parameters may be used when selecting the creep activation threshold **240.** For example, vehicle motion data **220** may include data representing traffic density, visual sight, as well as data representing vehicle characteristics and/or road conditions. For example, the upper limit of the creep mode activation threshold **240** may be lower if the vehicle 1 is a heavy vehicle, if the traffic is very dense, if the road is narrow or icy, and/or if the visual sight is impaired.

The initial creep speed assignor **250** may further be configured to apply an adjustment factor when assigning the initial creep speed based on the current travelling speed of the vehicle **1.** As mentioned earlier the initial creep speed may equal the current travelling speed of the vehicle **1.** However in some examples the adjustment factor may cause the initial creep speed assignor to assign an initial creep speed that differs from the current travelling speed of the vehicle **1.** The creep control system **200** comprises an adjustment factor obtainer **228** being configured to determine the adjustment factor based on speed change data **224.** The speed change data **224** represents the current acceleration or deceleration of the vehicle **1,** and a speed change threshold **226** is used by the adjustment factor obtainer **228** for determining if an adjustment factor should be applied by the initial creep speed assignor **250.** As an example, if the pedals **14, 16** are released at speed being within the creep mode activation threshold, but at a time where the vehicle **1** is subject to a significant acceleration, the adjustment factor may be a certain speed increase as compared to the current travelling speed in order to avoid over- or undershoot when the creep mode is activated.

The creep control system **200** further comprises a creep speed update control system **300** being configured to update the creep speed from the initial creep speed assigned by the initial creep speed assignor **250.** As shown in **FIG. 2A****,** the creep speed update control system **300** receives accelerator pedal release data **210** and/or brake pedal release data **212** and provides input to the vehicle speed controller **260** to update the creep speed.

The creep speed update control system **300** is shown in further details in **FIG. 2B****.** The creep speed update control system **300** is configured to cause a change in the creep speed set by the initial creep speed assignor **250** of the creep control system **200.** The creep speed update control system **300** comprises a speed increase data obtainer **310.** The speed increase data obtainer **310** is configured to receive accelerator pedal data **304** representing a desired creep speed increase. The accelerator pedal data **304** may be communicated directly by the accelerator pedal **14** or by the accelerator pedal release comparator **214** of the creep control system **200.** The accelerator pedal data **304** typically comprises information representing a depression of the accelerator pedal **14,** and preferably also the amount of depression. The accelerator pedal data **304** may also, in some examples, comprise information representing a release of the accelerator pedal **14** immediately subsequent to the depression. The accelerator pedal release comparator **214** may, as has been described previously, function as a filter by checking that the action on the accelerator pedal **14** is within a certain action threshold; hence, a very light tap on the accelerator pedal **14** may be disregarded by the accelerator pedal release comparator **214.**

The creep speed update control system **300** further comprises an updated creep speed assignor **320.** The updated creep speed assignor **320** is configured to receive data from the speed increase data obtainer **310,** and to assign an updated creep speed based on the data received from the speed increase data obtainer **310.** The updated creep speed assignor **320** may be configured to apply one or more algorithms for assigning the updated creep speed.

In one example, the updated creep speed assignor **320** is configured to assign the updated creep speed as the new vehicle travelling speed caused by the action on the accelerator pedal **14.** For this, the current vehicle speed is communicated to the updated creep speed assignor **320** as vehicle speed data **220.** Hence, in such example the vehicle is controlled in creep mode using an initial creep speed. If the driver wants to increase the creep speed, the driver depresses the accelerator pedal **14** thereby causing the vehicle **1** to accelerate to a higher speed. When the accelerator pedal **14** is released at the desired speed, the updated creep speed assignor **320** assigns the new (updated) creep speed as the new travelling speed of the vehicle **1.** In some examples, the updated creep speed assignor **320** will also do a check that the new travelling speed of the vehicle **1** is within the current creep mode activation threshold **240** as described earlier with regards to the creep control system **200.** If the new travelling speed of the vehicle **1** is outside the creep mode activation threshold **240,** creep will be terminated.

Termination of the creep mode may be implemented by the updated creep speed assignor **320** transmitting termination data **308** to the vehicle speed controller **260.**

In some examples the updated creep speed assignor **320** is configured to assign the updated creep speed using a preset speed increase **302.** In such examples the vehicle is controlled in creep mode using an initial creep speed. If the driver wants to increase the creep speed, the driver depresses the accelerator pedal **14** thereby causing the vehicle **1** to accelerate. When the accelerator pedal **14** is released, independent on the new travelling speed of the vehicle **1** the updated creep speed assignor **320** assigns the new (updated) creep speed as the previous speed of the vehicle **1** plus a preset speed increase. For example, the preset speed increase may be 1 km/h. If a further speed increase is desired, the driver may repeatedly tap/release the accelerator pedal **14** such that a double tap may cause a speed increase by 2 km/h. In some examples, the updated creep speed assignor **320** will also do a check that the new travelling speed of the vehicle **1** is within the current creep mode activation threshold **240** as described earlier with regards to the creep control system **200.** If the new travelling speed of the vehicle **1** is outside the creep mode activation threshold **240,** creep will be terminated.

The creep speed update control system **300** further comprises a speed decrease data obtainer **330.** The speed decrease data obtainer **330** is configured to receive brake pedal data **306** representing a desired creep speed decrease. The brake pedal data **306** may be communicated directly by the brake pedal **16** or by the brake pedal release comparator **216** of the creep control system **200.** The brake pedal data **306** typically comprises information representing a depression of the brake pedal **16,** and preferably also the amount of depression. The brake pedal data **306** may also, in some examples, comprise information representing a release of the brake pedal **16** immediately subsequent to the depression. The brake pedal release comparator **216** may, as has been described previously, function as a filter by checking that the action on the brake pedal **16** is within a certain action threshold; hence, a very light tap on the brake pedal **16** may be disregarded by the brake pedal release comparator **216.**

The updated creep speed assignor **320** is configured to receive data from the speed decrease data obtainer **330,** and to assign an updated creep speed based on the data received from the speed decrease data obtainer **330.** As for the speed increase, the updated creep speed assignor **320** may be configured to apply one or more algorithms for assigning the updated creep speed.

In one example, the updated creep speed assignor **320** is configured to assign the updated creep speed as the new vehicle travelling speed caused by the action on the brake pedal **16.** For this, the current vehicle speed is communicated to the updated creep speed assignor **320** as vehicle speed data **220.** Hence, in such example the vehicle is controlled in creep mode using an initial creep speed. If the driver wants to decrease the creep speed, the driver depresses the brake pedal **16** thereby causing the vehicle **1** to decelerate. When the brake pedal **16** is released at the desired speed, the updated creep speed assignor **320** assigns the new (updated) creep speed as the new travelling speed of the vehicle **1.** In some examples, the updated creep speed assignor **320** will also do a check that the new travelling speed of the vehicle **1** is within the current creep mode activation threshold **240** as described earlier with regards to the creep control system **200.** If the new travelling speed of the vehicle **1** is outside the creep mode activation threshold **240,** creep will be terminated.

In some examples the updated creep speed assignor **320** is configured to assign the updated creep speed using a preset speed decrease **304.** In such examples the vehicle is controlled in creep mode using an initial creep speed. If the driver wants to decrease the creep speed, the driver depresses the brake pedal **16** thereby causing the vehicle **1** to decelerate. When the brake pedal **16** is released, independent on the new travelling speed of the vehicle **1** the updated creep speed assignor **320** assigns the new (updated) creep speed as the previous speed of the vehicle **1** minus a preset speed decrease. For example, the preset speed decrease may be 0,5 km/h. If a further speed decrease is desired, the driver may repeatedly tap/release the brake pedal **16** such that a double tap may cause a speed decrease by 1 km/h. In some examples, the updated creep speed assignor **320** will also do a check that the new travelling speed of the vehicle **1** is within the current creep mode activation threshold **240** as described earlier with regards to the creep control system **200.** If the new travelling speed of the vehicle **1** is outside the creep mode activation threshold **240,** creep will be terminated.

In some examples, the preset speed decrease is dependent on the depression amount of the brake pedal **16.** A depression of between 0% and 15% may for example result in a speed proportional speed decrease from the current speed down to 0,5 km/h. If the current speed is 10 km/h and the depression amount is 7,5%, the updated creep speed will be 5 km/h (i.e. 50% of the initial creep speed). A depression of between 15% and 18% may bring down the creep speed to 0,5 km/h, while a depression of between 18% and 22% may for example bring down the creep speed to 0,25 km/h.

The updated creep speed assignor **320** may be further configured to receive proximity data **306,** and to assign an updated creep speed based on the proximity data **306.** For example, the proximity data **306** may comprise information of the traffic ahead, such as indicating that a distance to the next vehicle in front is decreasing. The updated creep speed assignor **320**may in such example set a new creep speed as a lower creep speed, thereby maintaining the distance to the traffic ahead.

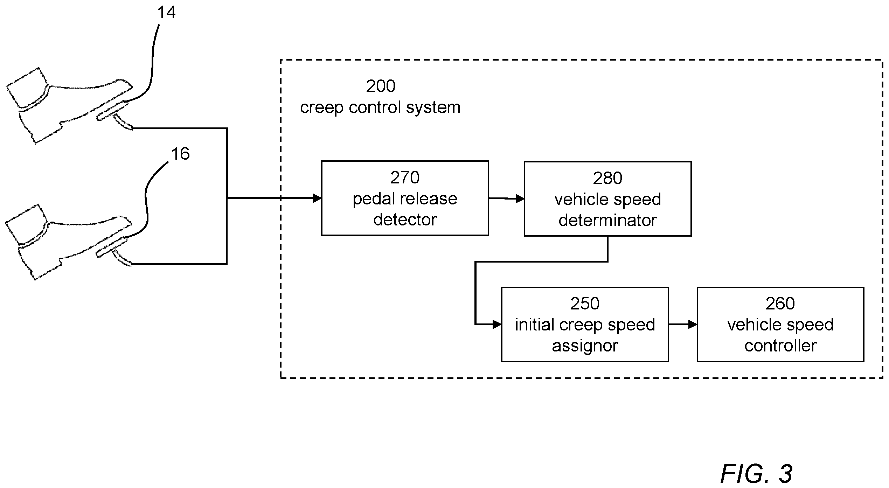

**FIG. 3** shows a creep control system **200** according to an example. The creep control system **200** comprises a pedal release detector **270** configured to detect at least a partial release of at least one of an accelerator pedal **14** or a brake pedal **16** of a vehicle **1.** The pedal release detector **270** may for example be implemented as the pedal release comparators **214, 216** described with reference to **FIG. 2A****.**

The creep control system **200** further comprises a vehicle speed determinator **280** configured to determine that an initial travelling speed of the vehicle **1** is within a predetermined creep activation threshold. The vehicle speed determinator **280** may for example by implemented as the creep mode determinator **230** described with reference to **FIG. 2A****.**

The pedal release detector **270** is further configured to determine that the brake pedal **16** is not depressed and that the accelerator pedal **14** is not sufficiently depressed to accelerate the vehicle **1** beyond the initial travelling speed.

The creep control system **200** further comprises an initial creep speed assignor **250** configured to set an initial creep speed based on the initial travelling speed of the vehicle **1,** and a vehicle speed controller **260** configured to maintain the vehicle **1** at the initial creep speed.

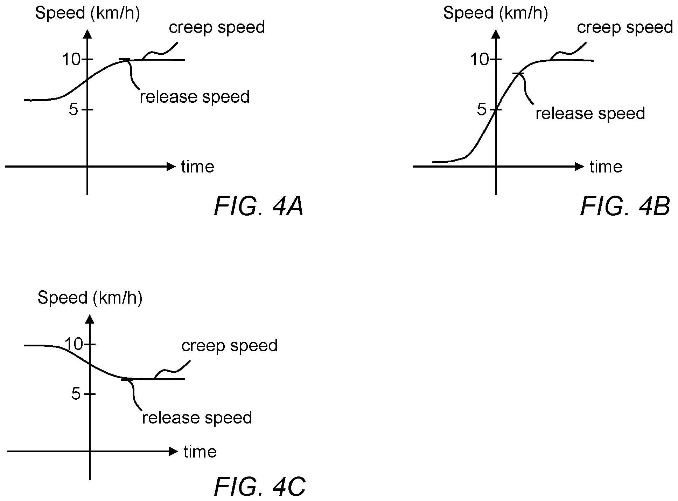

**FIGS. 4A-C** show diagrams illustrating the vehicle speed before and after creep is initiated by the creep control system **200.** Starting in **FIG. 4A****,** the vehicle is travelling at a speed of approximately 5 km/h. The speed is increased by a moderate acceleration up to around 10 km/h, which in this example is within the creep mode activation threshold. When the accelerator pedal is released at the final speed of 10 km/h, the creep control system **200** will control the vehicle **1** to enter creep at the same travelling speed, i.e. at 10 km/h.

In **FIG. 4B** another example is shown. The vehicle is initially travelling at a speed of approximately 1 km/h. The speed is increased by a heavy acceleration y pushing the accelerator pedal. At around 8 km/h, the accelerator pedal is released. As the vehicle **1** is still accelerating, the acceleration is allowed to decrease while the speed increases up to around 10 km/h, which in this example is within the creep mode activation threshold. The creep speed is assigned as the final speed of 10 km/h, corresponding to the creep control system **200** applying a speed adjustment factor as explained above, and the creep control system **200** will control the vehicle **1** to enter creep at this speed.

In **FIG. 4C** another example is shown. The vehicle is travelling at a speed of approximately 10 km/h. The speed is decreased by a moderate deceleration down to around 7 km/h, which in this example is within the creep mode activation threshold. When the brake pedal is released at the final speed of 7 km/h, the creep control system **200** will control the vehicle **1** to enter creep at the same travelling speed, i.e. at 7 km/h.

Other examples of initiating creep mode are possible, as will be described in the following. According to one example, the vehicle is travelling at a speed of approximately 20 km/h in an uphill slope. The creep mode activation threshold is between 3 and 10 km/h. When the accelerator pedal is released at the initial speed of 20 km/h while still travelling uphill, the vehicle will start to decelerate. The creep control system **200** will control the vehicle **1** to enter creep not at soon as the creep mode activation threshold is reached, because due to the uphill slope the maximum creep speed will likely be too fast. Instead the vehicle will be allowed to decelerate below the upper limit of the creep mode activation threshold, e.g. down to 6 km/h before creep mode is started at the specific speed of 6 km/h.

In another example the vehicle is travelling at a speed of approximately 20 km/h. The creep mode activation threshold is between 3 and 10 km/h. When the accelerator pedal is released at the initial speed of 20 km/h, the driver is immediately activate braking either by using a retarder stalk or by pressing the brake pedal. The vehicle will start to decelerate, and the creep control system **200** will control the vehicle 1 to enter creep not at soon as the creep mode activation threshold is reached, because due to the brake activation the lowest possible speed is maintained. Hence the vehicle will be allowed to decelerate down to the lower limit of the creep mode activation threshold, i.e. down to 3 km/h before creep mode is started at the specific speed of 3 km/h.

In a further example the vehicle is travelling at a speed of approximately 20 km/h. The creep mode activation threshold is between 3 and 10 km/h. The accelerator pedal is released at the initial speed of 20 km/h because the driver is approaching a vehicle travelling at 4 km/h. The vehicle will start to decelerate, and the creep control system **200** will control the vehicle **1** to enter creep not at soon as the creep mode activation threshold is reached, because due to the approaching vehicle in front the feeling of colliding should be prevented. Hence the vehicle will be allowed to decelerate down to the same speed as the vehicle in front, i.e. down to 4 km/h before creep mode is started at the specific speed of 4 km/h.

Generally, and idea is to control the vehicle **1** at a certain speed (i.e. the creep speed) based on assumed driver intentions. The driver intentions may be assessed based on actions by the driver, or by traffic characteristics. In some further examples described in the following, this will be explained.

According to one example, the vehicle is travelling in reverse at a speed of approximately 8 km/h when approaching a downhill slope. The creep mode activation threshold is between 3 and 9 km/h. When entering the downhill slope the vehicle will start to accelerate. However, the creep control system **200** will control the vehicle **1** to enter creep immediately due to a first input that the vehicle is in reverse motion, and to a second input that the vehicle is travelling downhill. Due to the downhill slope the speed of the vehicle would otherwise be allowed to increase. Instead the vehicle will be maintained at 8 km/h when creep mode is started at the specific speed of 8 km/h. Restricting the speed may be controlled by activating one or more service brakes, apply generative braking, or using an engine brake.

According to another example, the vehicle is travelling forward at a speed of approximately 20 km/h when approaching a downhill slope. The creep mode activation threshold is between 3 and 9 km/h. Before entering the downhill slope the driver presses the brake pedal to reduce the speed to e.g. 8 km/h. When entering the downhill slope at 8 km/h, the vehicle will start to accelerate. However, the creep control system **200** will control the vehicle 1 to enter creep immediately due to a first input that the vehicle is in forward motion, to a second input that the brake pedal has been pressed, and to a third input that the vehicle is travelling downhill. Due to the downhill slope and due to the braking of the driver a speed increase would otherwise increase beyond the desired speed. Instead the vehicle will be maintained at 8 km/h when creep mode is started at the specific speed of 8 km/h.

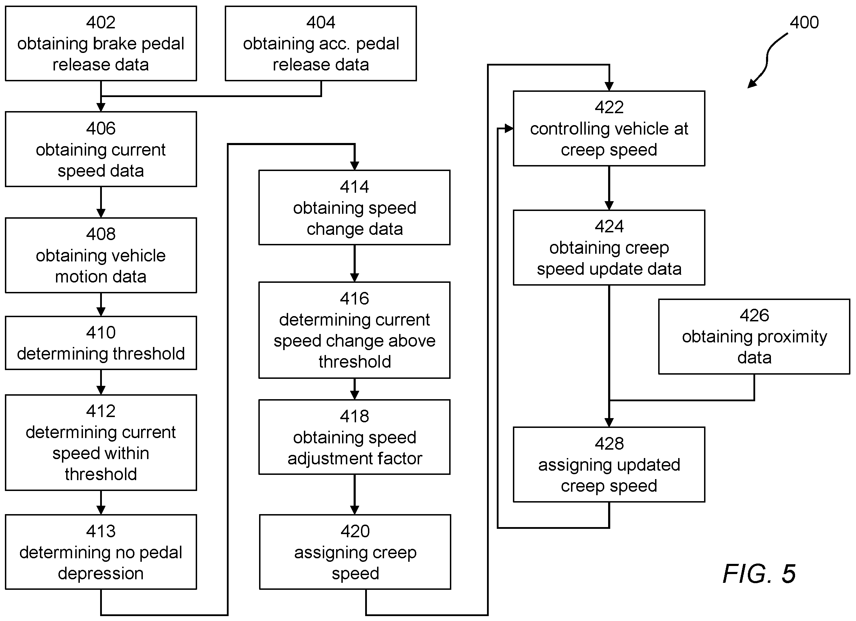

**FIG. 5** is a flowchart illustrating a method **400** for controlling creep mode of a vehicle **1.** The method **400** performs obtaining **402** brake pedal release data and obtaining **404** accelerator pedal release data. Hence, the method **400** detects at least a partial release of at least one of an accelerator pedal **14** or a brake pedal **16** of a vehicle **1.** The method **400** further performs obtaining **406** the current travelling speed of the vehicle **1.** The method **400** further performs obtaining **408** vehicle motion data, and determines **410** a creep mode activation threshold based on the vehicle motion data.

The method **400** performs determining **412** that the current travelling speed of the vehicle **1** is within the creep mode activation threshold, and further performs determining **413** that the brake pedal is not depressed and that the accelerator pedal is not sufficiently depressed to accelerate the vehicle **1** beyond the initial travelling speed.

The method **400** further performs obtaining **414** speed change data, and performs determining **416** if the current speed change (i.e. acceleration or deceleration of the vehicle **1**) is within a predetermined speed change threshold. If so, the method **400** performs obtaining **418** a seed adjustment factor and the method **400** then performs assigning **420** a creep speed as well as performs controlling **422** the vehicle at the assigned creep speed.

The method **400** may also comprise obtaining **424** creep speed update data by the driver operating the accelerator pedal and/or the brake pedal. The method **400** may also comprise obtaining **428** proximity data. Based on the creep speed update data and/or the proximity data, the method **400** further performs assigning **428** an updated creep speed which is used for controlling **422** the vehicle at the updated creep speed.

**FIG. 6** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory 504 and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., randomaccess memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system comprising processing circuitry configured to: detect at least a partial release of at least one of an accelerator pedal (14) or a brake pedal (16) of a vehicle (1); determine that an initial travelling speed is within a predetermined creep activation threshold (240); determine the brake pedal (16) is not depressed and the accelerator pedal (14) is not sufficiently depressed to accelerate the vehicle (1) beyond the initial travelling speed; set an initial creep speed based on the initial travelling speed of the vehicle; and maintain the vehicle (1) at the initial creep speed.

**Example 2:** The computer system of Example 1, wherein the processing circuitry is further configured to: detect a release of at least one of the accelerator pedal (14) or the brake pedal (16) by at least 95%.

**Example 3:** The computer system of any of Examples 1-2, wherein the processing circuitry is further configured to: assign the initial creep speed as the initial travelling speed of the vehicle (1).

**Example 4:** The computer system of any of Examples 1-2, wherein the processing circuitry is further configured to: obtain speed change data corresponding to a current acceleration or deceleration of the vehicle (1); determine that the current acceleration or deceleration is above a preset acceleration or deceleration threshold (226); obtain a speed adjustment factor based on the speed change data; and assign the initial creep speed as the initial travelling speed plus or minus the speed adjustment factor.

**Example 5:** The computer system of any of Examples 1-4, wherein the processing circuitry is further configured to: obtain creep speed increase data corresponding to the accelerator pedal (14) of the vehicle (1) being temporarily depressed; assign an updated creep speed based on the creep speed increase data; and maintain the vehicle (1) at the assigned updated creep speed.

**Example 6:** The computer system of Example 5, wherein the processing circuitry is further configured to: obtain the creep speed increase data based on the depression amount of the accelerator pedal (14).

**Example 7:** The computer system of any of Examples 5-6, wherein the processing circuitry is further configured to: assign the updated creep speed as the current speed of the vehicle (1) immediately after the accelerator pedal (14) being temporarily depressed.

**Example 8:** The computer system of any of Examples 5-6, wherein the processing circuitry is further configured to: assign the updated creep speed as the previous creep speed plus a preset speed increase.

**Example 9:** The computer system of any of Examples 1-8, wherein the processing circuitry is further configured to: obtain creep speed decrease data corresponding to the brake pedal (16) of the vehicle (1) being temporarily depressed; assign an updated creep speed based on the creep speed decrease data; and maintain the vehicle (1) at the assigned updated creep speed.

**Example 10:** The computer system of Example 9, wherein the processing circuitry is further configured to: obtain the creep speed decrease data based on the depression amount of the brake pedal (16).

**Example 11:** The computer system of any of Examples 9-10, wherein the processing circuitry is further configured to: assign the updated creep speed as the current speed of the vehicle (1) immediately after the brake pedal (16) being temporarily depressed.

**Example 12:** The computer system of any of Examples 9-10, wherein the processing circuitry is further configured to: assign the updated creep speed as the previous creep mode speed minus a preset speed decrease.

**Example 13:** The computer system of any of Examples 1-13, wherein the processing circuitry is further configured to: obtain vehicle motion data (222) corresponding to the vehicle (1) moving forward or reverse; and selecting the creep activation threshold (240) based on the vehicle motion data (222).

**Example 14:** The computer system of any of Examples 1-13, wherein the processing circuitry is further configured to: obtain proximity data (306) corresponding to the presence of a moving object ahead of the vehicle (1) in the driving direction; assign an updated creep speed for maintaining a minimum distance to the moving object; and maintain the vehicle (1) at the assigned updated creep speed.

**Example 15:** The computer system of Example 1, wherein the processing circuitry is further configured to: detect a release of at least one of the accelerator pedal (14) or the brake pedal (16) by at least 95%; assign the initial creep speed as the initial travelling speed of the vehicle (1); obtain creep speed increase data corresponding to the accelerator pedal (14) of the vehicle (1) being temporarily depressed and based on the depression amount of the accelerator pedal (14); assign an updated creep speed as the current speed of the vehicle (1) immediately after the accelerator pedal (14) has been temporarily depressed; and maintain the vehicle (1) at the assigned updated creep speed; obtain creep speed decrease data corresponding to the brake pedal (16) of the vehicle (1) being temporarily depressed and based on the depression amount of the brake pedal (16); assign an updated creep speed based as the previous creep speed minus a preset speed decrease; and maintain the vehicle (1) at the assigned updated creep mode speed; obtain vehicle motion data (222) corresponding to the vehicle (1) moving forward or reverse; and selecting the creep activation threshold (240) based on the vehicle motion data (222); obtain proximity data (306) corresponding to the presence of a moving object ahead of the vehicle (1) in the driving direction; assign an updated creep speed for maintaining a minimum distance to the moving object; and maintain the vehicle (1) at the assigned updated creep speed; and obtaining creep mode termination data; and terminating control of the vehicle (1) at the updated creep speed.

**Example 16:** A vehicle (1) comprising the computer system of any of Examples 1-15.

**Example 17:** A computer-implemented method, comprising: detecting (402, 404), by processing circuitry of a computer system, at least a partial release of at least one of an accelerator pedal or a brake pedal of a vehicle; determining (412), by the processing circuitry, that an initial travelling speed is within a predetermined creep activation threshold; determining (413), by the processing circuitry, the brake pedal is not depressed and the accelerator pedal is not sufficiently depressed to accelerate the vehicle beyond the initial travelling speed; setting (420), by the processing circuitry, an initial creep speed based on the initial travelling speed of the vehicle; and maintaining (422), by the processing circuitry, the vehicle at the initial creep speed.

**Example 18:** The method of Example 17, further comprising: obtaining (408), by the processing circuitry, vehicle motion data corresponding to the vehicle moving forward or in reverse; and selecting (410), by the processing circuitry, the creep activation threshold based on the vehicle motion data.

**Example 19:** A computer program product comprising program code for performing, when executed by the processing circuitry, the method of any of Examples 17-18.

**Example 20:** A non-transitory computer-readable storage medium comprising instructions, which when executed by the processing circuitry, cause the processing circuitry to perform the method of any of Examples 17-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
detect at least a partial release of at least one of an accelerator pedal (14) or a brake pedal (16) of a vehicle (1);
determine that an initial travelling speed is within a predetermined creep activation threshold (240);
determine the brake pedal (16) is not depressed and the accelerator pedal (14) is not sufficiently depressed to accelerate the vehicle (1) beyond the initial travelling speed;
set an initial creep speed based on the initial travelling speed of the vehicle; and
maintain the vehicle (1) at the initial creep speed.

2. The computer system of claim 1, wherein the processing circuitry is further configured to:
detect a release of at least one of the accelerator pedal (14) or the brake pedal (16) by at least 95%

3. The computer system of any of claims 1-2, wherein the processing circuitry is further configured to:
assign the initial creep speed as the initial travelling speed of the vehicle (1).

4. The computer system of any of claims 1-2, wherein the processing circuitry is further configured to:
obtain speed change data corresponding to a current acceleration or deceleration of the vehicle (1);
determine that the current acceleration or deceleration is above a preset acceleration or deceleration threshold (226);
obtain a speed adjustment factor based on the speed change data; and
assign the initial creep speed as the initial travelling speed plus or minus the speed adjustment factor.

5. The computer system of any of claims 1-4, wherein the processing circuitry is further configured to:
obtain creep speed increase data corresponding to the accelerator pedal (14) of the vehicle (1) being temporarily depressed;
assign an updated creep speed based on the creep speed increase data; and
maintain the vehicle (1) at the assigned updated creep speed.

6. The computer system of claim 5, wherein the processing circuitry is further configured to:
obtain the creep speed increase data based on the depression amount of the accelerator pedal (14).

7. The computer system of any of claims 1-6, wherein the processing circuitry is further configured to:
obtain creep speed decrease data corresponding to the brake pedal (16) of the vehicle (1) being temporarily depressed;
assign an updated creep speed based on the creep speed decrease data; and
maintain the vehicle (1) at the assigned updated creep speed.

8. The computer system of claim 7, wherein the processing circuitry is further configured to:
obtain the creep speed decrease data based on the depression amount of the brake pedal (16).

9. The computer system of any of claims 1-8, wherein the processing circuitry is further configured to:
obtain vehicle motion data (222) corresponding to the vehicle (1) moving forward or reverse; and
selecting the creep activation threshold (240) based on the vehicle motion data (222).

10. The computer system of claim 1, wherein the processing circuitry is further configured to:
detect a release of at least one of the accelerator pedal (14) or the brake pedal (16) by at least 95%;
assign the initial creep speed as the initial travelling speed of the vehicle (1);
obtain creep speed increase data corresponding to the accelerator pedal (14) of the vehicle (1) being temporarily depressed and based on the depression amount of the accelerator pedal (14);
assign an updated creep speed as the current speed of the vehicle (1) immediately after the accelerator pedal (14) has been temporarily depressed; and
maintain the vehicle (1) at the assigned updated creep speed;
obtain creep speed decrease data corresponding to the brake pedal (16) of the vehicle (1) being temporarily depressed and based on the depression amount of the brake pedal (16);
assign an updated creep speed based as the previous creep speed minus a preset speed decrease; and
maintain the vehicle (1) at the assigned updated creep mode speed;
obtain vehicle motion data (222) corresponding to the vehicle (1) moving forward or reverse; and
selecting the creep activation threshold (240) based on the vehicle motion data (222);
obtain proximity data (306) corresponding to the presence of a moving object ahead of the vehicle (1) in the driving direction;
assign an updated creep speed for maintaining a minimum distance to the moving object; and
maintain the vehicle (1) at the assigned updated creep speed; and
obtaining creep mode termination data; and
terminating control of the vehicle (1) at the updated creep speed.

11. A vehicle (1) comprising the computer system of any of claims 1-10.

12. A computer-implemented method, comprising:
detecting (402, 404), by processing circuitry of a computer system, at least a partial release of at least one of an accelerator pedal or a brake pedal of a vehicle;
determining (412), by the processing circuitry, that an initial travelling speed is within a predetermined creep activation threshold;
determining (413), by the processing circuitry, the brake pedal is not depressed and the accelerator pedal is not sufficiently depressed to accelerate the vehicle beyond the initial travelling speed;
setting (420), by the processing circuitry, an initial creep speed based on the initial travelling speed of the vehicle; and
maintaining (422), by the processing circuitry, the vehicle at the initial creep speed.

13. The method of claim 12, further comprising:
obtaining (408), by the processing circuitry, vehicle motion data corresponding to the vehicle moving forward or in reverse; and
selecting (410), by the processing circuitry, the creep activation threshold based on the vehicle motion data.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
